(19) **Europäisches Patentamt / European Patent Office / Office européen des brevets**

(11) **EP 1 617 409 B1**

(12) **EUROPEAN PATENT SPECIFICATION**

(45) Date of publication and mention
of the grant of the patent:
**20.04.2011 Bulletin 2011/16**

(51) Int Cl.:
***G10L 15/26*** *(2006.01)*

(21) Application number: **05106352.7**

(22) Date of filing: **12.07.2005**

(54) **Multimodal method to provide input to a computing device**

Mehrmode Verfahren zur Dateneingabe in ein Datenverarbeitungsgerät

Méthode multi-modes d'entrée de données dans un appareil de calcul

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.07.2004 US 889822**

(43) Date of publication of application:
**18.01.2006 Bulletin 2006/03**

(73) Proprietor: **MICROSOFT CORPORATION**
**Redmond, Washington 98052-6399 (US)**

(72) Inventor: **Chang, Eric I-Chao**
**Redmond, WA 98052 (US)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**WO-A-95/25326**    **US-A- 5 799 276**
**US-A1- 2002 048 350**    **US-A1- 2004 243 415**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to providing input into a computing device. More particularly, the present invention relates to a multimodal method of providing input that includes speech recognition and identification of desired input from a set of alternatives to improve efficiency.

Small computing devices such as personal information managers (PIM), devices and portable phones are used with ever increasing frequency by people in their day-to-day activities. With the increase in processing power now available for microprocessors used to run these devices, the functionality of these devices are increasing, and in some cases, merging. For instance, many portable phones now can be used to access and browse the Internet as well as can be used to store personal information such as addresses, phone numbers and the like.

In view that these computing devices are being used for ever increasing tasks, it is therefore necessary to enter information into the computing device easily and efficiently. Unfortunately, due to the desire to keep these devices as small as possible in order that they are easily carried, conventional keyboards having all the letters of the alphabet as isolated buttons are usually not possible due to the limited surface area available on the housings of the computing devices. Likewise, handwriting recognition requires a pad or display having an area convenient for entry of characters, which can increase the overall size of the computing device. Moreover though, handwriting recognition is a generally slow input methodology.

There is thus an ongoing need to improve upon the manner in which data, commands and the like are entered into computing devices. Such improvements would allow convenient data entry for small computing devices such as PIMs, telephones and the like, and can further be useful in other computing devices such as personal computers, televisions, etc.

US 20041243415 A1 relates to knowledge-based speech recognition having frame length computer-based estimated pitch period of vocalic intervals. An input speech signal is captured, then segmented based on the detection of pitch period, and a series of hypothesized acoustic feature vectors for the input speech signal is generated that characterizes the signal in terms of primary acoustic events, detectable vowel sounds and other acoustic features. A largely speaker-independent dictionary is employed based upon the application of phonological and phonetic/acoustic rules to generate acoustic event transcriptions against which the series hypothesized acoustic feature rectors are compared to select word choices. Local and global syntactic analysis of the word choices is provided to enhance the recognition capability of the methods and apparatus. The described technique is directed to the conversion of input acoustic waves into written text corresponding to the words of the spoken utterance, or machine understandable commands. Those words for which the recognition system cannot select a word choice with a confidence level exceeding a preset threshold are flagged for the user's consideration during review. A dictionary is arranged as a series of indexes that contain orthographic, phonetic, acoustic and grammatical information about each word. Once a phonetic cloud has been generated, certain rules are applied to the words to generate vocabulary acoustic event transcriptions. These rules convert the phonetic transcriptions of one or more variants of a word into a written presentation which describes a work as a lattice of acoustic events. As an initial step in dictionary generation, the active vocabulary of the speech recognition system is selected. Each word in the dictionary includes all permissible forms of that verb. In the initial lexical access stage, the rough acoustic event transcription for the input speech signal is compared to one or more orbits of vocabulary acoustic event transcriptions. Only the words of those orbits for which the rough acoustic transcription either matches the acoustic event transcription are considered in the next stage of lexical access, words in orbits for which there is no match are not considered further. A comparison between the phonetic transcription and the input speech signal acoustic vector is then used to select words from the list which have maximum correspondence to the input speech signal.

US 5,799,276 A relates to the dynamic adaptation of a large vocabulary speech recognition system and to the use of constraints from a database in a large vocabulary speech recognition system. The lexical network of a large vocabulary speech recognition is structured to effectuate the rapid and efficient addition of words to the system's active vocabulary. The lexical network is structured to include phonetic constraints nodes, which organize the inter-word phonetic information in the network, and word class nodes which organize the syntactic semantic information in the network. A speech recognition system comprises a signal processor which converts the acoustic input from a speaker into a form suitable for computer-processing, e.g. a sequence of factors, each representing the frequency spectrum of a portion of the speech. The resulting signals are then analyzed in a segmenter to hypothesize boundaries between the sub-constituents of the input. The segmentation is performed in accordance with acoustic models available to the system. The output of the segmenter is applied to a phonetic classifier, which generates a phonetic lattice representation of the acoustic input. This lattice describes the various forms corresponding to the hypothesized segments, and the probabilities associated with each. Paths through this lattice, each of which represents a hypothesis of a sequence of phones corresponding to the acoustic input, are compared with possible paths in a corresponding recognition network in a search stage. Language models guide the search for the best match between the phonetic paths generated by a classifier and the path chased through a recognition network. The resultant is an output representing a recognized communication, for example a sentence.

US 2002/ 048350 A1 relates to a voice/pointer operated system. A voice and pointer operated system includes a pen provided with a microphone responsive to a voice command for providing a voice signal and an electronic device having a pointer-responsive area in the form of a touch screen thereon for interfacing with the pen as well as an apparatus for recognizing the voice signal and producing an action routine denote thereby. The pointer-responsive area may comprise a touch screen presenting frames for interaction with the pen to select function for the electronic device with voice commands entered via the microphone in the pen being used to provide input data to the electronic device. The pen may be wireless or electrically coupled to the electronic device.

It is the object of the present invention to provide a convenient data entry for small computing devices.

This object is solved by the subject matter of the independent claims.

Preferred embodiments are defined in the dependent claims.

A method and system for providing input into a computer includes receiving input speech from a user and providing data corresponding to the input speech. The data is used to search a collection of phrases and identify one or more phrases from the collection having a relation to the data. The one or more phrases are visually rendered to the user. An indication is received of a selection from the user of one of the phrases and the selected phrase is provided to an application operating on the computing device.

The combined use of speech input and selection of visually rendered possible phrases provides an efficient method for users to access information, particularly on a mobile computing device where hand manipulated input devices are difficult to implement. By allowing the user to provide an audible search query, the user can quickly provide search terms, which can be used to search a comprehensive collection of possible phrases the user would like to input. In addition, since the user can easily scan a visually rendered list of possible phrases, the user can quickly find the desired phrase, and using for example a pointing device, select the phrase that is then used as input for an application executing on the computing device.

BRIEF DESCRIPTION OF THE DRAWINGS

FIG. 1 is a plan view of a first embodiment of a computing device operating environment.
FIG. 2 is a block diagram of the computing device of FIG. 1.
FIG. 3 is a block diagram of a general purpose computer.
FIG. 4 is a block diagram of a data entry system.
FIG. 5 is a representation of a lattice.
FIG. 6 is a flow diagram of a method for providing input in a computer system.

DETAILED DESCRIPTION OF THE ILLUSTRATIVE EMBODIMENTS

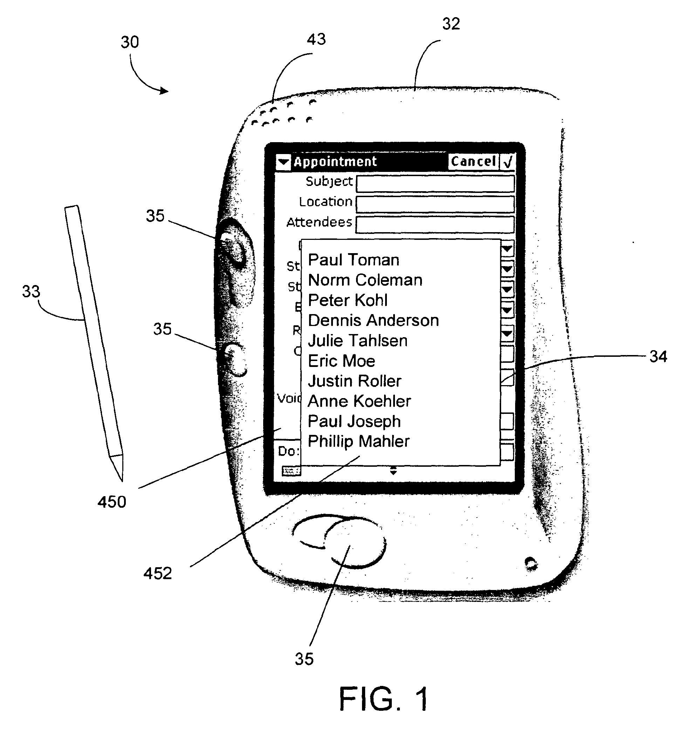

Before describing aspects of the present invention, it may be useful to describe generally computing devices that can incorporate and benefit from these aspects. Referring now to FIG. 1, an exemplary form of a data management device (PIM, PDA or the like) is illustrated at 30. However, it is contemplated that the present invention can also be practiced using other computing devices discussed below, and in particular, those computing devices having limited surface areas for input buttons or the like. For example, phones and/or data management devices will also benefit from the present invention. Such devices will have an enhanced utility compared to existing portable personal information management devices and other portable electronic devices, and the functions and compact size of such devices will more likely encourage the user to carry the device at all times. Accordingly, it is not intended that aspects of the present invention herein described be limited by the disclosure of an exemplary data management or PIM device, phone or computer herein illustrated.

An exemplary form of a data management mobile device 30 is illustrated in FIG. 1. The mobile device 30 includes a housing 32 and has a user interface including a display 34, which uses a contact sensitive display screen in conjunction with a stylus 33. The stylus 33 is used to press or contact the display 34 at designated coordinates to select a field, to selectively move a starting position of a cursor, or to otherwise provide command information such as through gestures or handwriting. Alternatively, or in addition, one or more buttons 35 can be included on the device 30 for navigation. In addition, other input mechanisms such as rotatable wheels, rollers or the like can also be provided. However, it should be noted that the invention is not intended to be limited by these forms of input mechanisms. For instance, another form of input can include a visual input such as through computer vision.

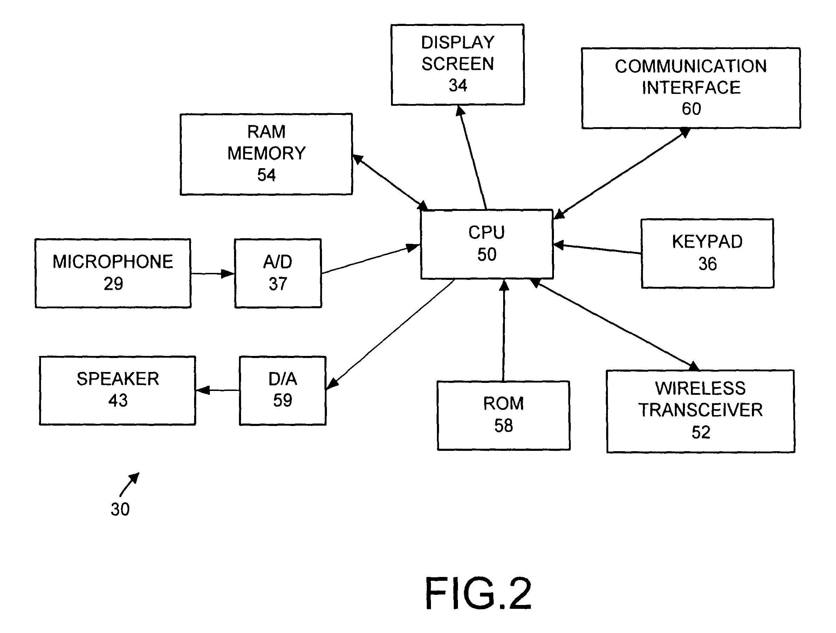

Referring now to FIG. 2, a block diagram illustrates the functional components comprising the mobile device 30. A central processing unit (CPU) 50 implements the software control functions. CPU 50 is coupled to display 34 so that text and graphic icons generated in accordance with the controlling software appear on the display 34. A speaker 43 can be coupled to CPU 50 typically with a digital-to-analog converter 59 to provide an audible output. Data that is downloaded or entered by the user into the mobile device 30 is stored in a non-volatile read/write random access memory store 54 bi-directionally coupled to the CPU 50. Random access memory (RAM) 54 provides volatile storage for instructions that are executed by CPU 50, and storage for temporary data, such as register values. Default values for configuration options and other variables are stored in a read only memory (ROM) 58. ROM 58 can also be used to store the operating system software for the device that controls the basic functionality of the mobile 30 and other operating system kernel functions (e.g., the loading of software components into RAM 54).

RAM 54 also serves as a storage for the code in the manner analogous to the function of a hard drive on a PC that is used to store application programs. It should be noted that although non-volatile memory is used for storing the code, it alternatively can be stored in volatile memory that is not used for execution of the code.

Wireless signals can be transmitted/received by the mobile device through a wireless transceiver 52, which is coupled to CPU 50. An optional communication interface 60 can also be provided for downloading data directly from a computer (e.g., desktop computer), or from a wired network, if desired. Accordingly, interface 60 can comprise various forms of communication devices, for example, an infrared link, modem, a network card, or the like.

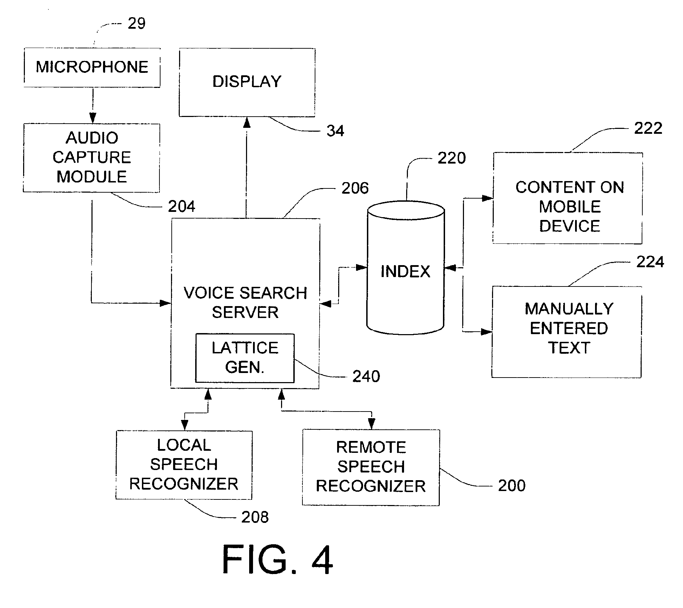

Mobile device 30 includes a microphone 29, and analog-to-digital (A/D) converter 37, and an optional recognition program (speech, DTMF, handwriting, gesture or computer vision) stored in store 54. By way of example, in response to audible information, instructions or commands from a user of device 30, microphone 29 provides speech signals, which are digitized by A/D converter 37. The speech recognition program can perform normalization and/or feature extraction functions on the digitized speech signals to obtain intermediate speech recognition results. Speech recognition can be performed on mobile device 30 and/or using wireless transceiver 52 or communication interface 60, speech data can be transmitted to a remote recognition server 200 over a local or wide area network, including the Internet as illustrated in FIG. 4.

In addition to the portable or mobile computing devices described above, it should also be understood that the present invention can be used with numerous other computing devices such as a general desktop computer. For instance, the present invention will allow a user with limited physical abilities to input or enter text into a computer or other computing device when other conventional input devices, such as a full alpha-numeric keyboard, are too difficult to operate.

The invention is also operational with numerous other general purpose or special purpose computing systems, environments or configurations. Examples of well known computing systems, environments, and/or configurations that may be suitable for use with the invention include, but are not limited to, regular telephones (without any screen) personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

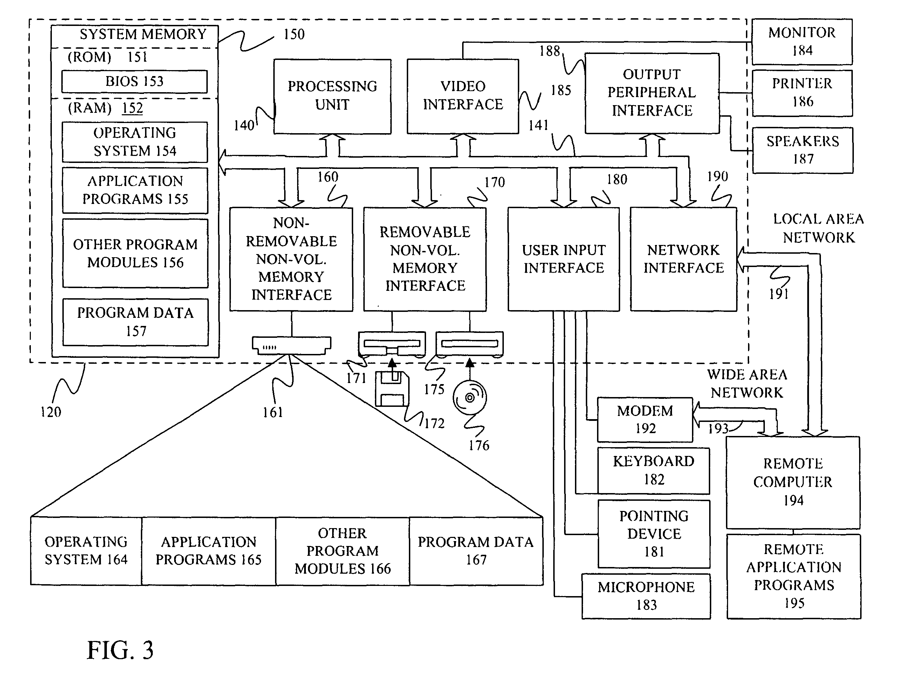

The following is a brief description of a general purpose computer 120 illustrated in FIG. 3. However, the computer 120 is again only one example of a suitable computing environment and is not intended to suggest any limitation as to the scope of use or functionality of the invention. Neither should the computer 120 be interpreted as having any dependency or requirement relating to any one or combination of components illustrated therein.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. Tasks performed by the programs and modules are described below and with the aid of figures. Those skilled in the art can implement the description and figures provided herein as processor executable instructions, which can be written on any form of a computer readable medium.

With reference to FIG. 3, components of computer 120 may include, but are not limited to, a processing unit 140, a system memory 150, and a system bus 141 that couples various system components including the system memory to the processing unit 140. The system bus 141 may be any of several types of bus structures including a memory bus or memory controller, a peripheral bus, and a local bus using any of a variety of bus architectures. By way of example, and not limitation, such architectures include Industry Standard Architecture (ISA) bus, Universal Serial Bus (USB), Micro Channel Architecture (MCA) bus, Enhanced ISA (EISA) bus, Video Electronics Standards Association (VESA) local bus, and Peripheral Component Interconnect (PCI) bus also known as Mezzanine bus. Computer 120 typically includes a variety of computer readable mediums. Computer readable mediums can be any available media that can be accessed by computer 120 and includes both volatile and nonvolatile media, removable and non-removable media. By way of example, and not limitation, computer readable mediums may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 120.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, FR, infrared and other wireless media. Combinations of any of the above should also be included within the scope of computer readable media.

The system memory 150 includes computer storage media in the form of volatile and/or nonvolatile memory such as read only memory (ROM) 151 and random access memory (RAM) 152. A basic input/output system 153 (BIOS), containing the basic routines that help to transfer information between elements within computer 120, such as during start-up, is typically stored in ROM 151. RAM 152 typically contains data and/or program modules that are immediately accessible to and/or presently being operated on by processing unit 140. By way of example, and not limitation, FIG. 3 illustrates operating system 54, application programs 155, other program modules 156, and program data 157.

The computer 120 may also include other removable/non-removable volatile/nonvolatile computer storage media. By way of example only, FIG. 3 illustrates a hard disk drive 161 that reads from or writes to non-removable, nonvolatile magnetic media, a magnetic disk drive 171 that reads from or writes to a removable, nonvolatile magnetic disk 172, and an optical disk drive 175 that reads from or writes to a removable, nonvolatile optical disk 176 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 161 is typically connected to the system bus 141 through a non-removable memory interface such as interface 160, and magnetic disk drive 171 and optical disk drive 175 are typically connected to the system bus 141 by a removable memory interface, such as interface 170.

The drives and their associated computer storage media discussed above and illustrated in FIG. 3, provide storage of computer readable instructions, data structures, program modules and other data for the computer 120. In FIG. 3, for example, hard disk drive 161 is illustrated as storing operating system 164, application programs 165, other program modules 166, and program data 167. Note that these components can either be the same as or different from operating system 154, application programs 155, other program modules 156, and program data 157. Operating system 164, application programs 165, other program modules 166, and program data 167 are given different numbers here to illustrate that, at a minimum, they are different copies.

A user may enter commands and information into the computer 120 through input devices such as a keyboard 182, a microphone 183, and a pointing device 181, such as a mouse, trackball or touch pad. Other input devices (not shown) may include a joystick, game pad, satellite dish, scanner, or the like. These and other input devices are often connected to the processing unit 140 through a user input interface 180 that is coupled to the system bus, but may be connected by other interface and bus structures, such as a parallel port, game port or a universal serial bus (USB). A monitor 184 or other type of display device is also connected to the system bus 141 via an interface, such as a video interface 185. In addition to the monitor, computers may also include other peripheral output devices such as speakers 187 and printer 186, which may be connected through an output peripheral interface 188.

The computer 120 may operate in a networked environment using logical connections to one or more remote computers, such as a remote computer 194. The remote computer 194 may be a personal computer, a hand-held device, a server, a router, a network PC, a peer device or other common network node, and typically includes many or all of the elements described above relative to the computer 120. The logical connections depicted in FIG. 3 include a local area network (LAN) 191 and a wide area network (WAN) 193, but may also include other networks. Such networking environments are commonplace in offices, enterprise-wide computer networks, intranets and the Internet.

When used in a LAN networking environment, the computer 120 is connected to the LAN 191 through a network interface or adapter 190. When used in a WAN networking environment, the computer 120 typically includes a modem 192 or other means for establishing communications over the WAN 193, such as the Internet. The modem 192, which may be internal or external, may be connected to the system bus 141 via the user input interface 180, or other appropriate mechanism. In a networked environment, program modules depicted relative to the computer 120, or portions thereof, may be stored in the remote memory storage device. By way of example, and not limitation, FIG. 3 illustrates remote application programs 195 as residing on remote computer 194. It will be appreciated that the network connections shown are exemplary and other means of establishing a communications link between the computers may be used.

FIG. 4 schematically illustrates components or modules suitable for implementing aspects of the present invention. On the mobile device 30, by way of example, speech input captured by microphone 29 and suitably processed by an audio capture module 204 is provided to a voice search server 206. For instance, the data can be transmitted to the voice search server 206 in PCM format. The voice search server 206 passes the received speech samples to a local speech recognition module 208 and/or to remote speech recognition server 200. Large vocabulary speech recognition and/or application specific speech recognition can be employed. Likewise, speech recognition can employ phonetic recognition at the phone level, word fragment level or word level. Recognized results are returned back to the voice search server 206. The recognized results are then used by the voice search server 206 to formulate a data query (e.g. pattern) for an information retrieval technique that in turn provides a ranked list of relevant items, for instance text phrases, based on information known to exist on the computing device.

Many known techniques of information retrieval can be used. In one embodiment, to accelerate the retrieval process, an index 220 of information to be searched and possibly retrieved is created. For instance, the index 220 can be based on content 222 available on the computing device (e.g. addresses, appointments, e-mail messages, etc.) as well as input 224 otherwise manually entered into the computing device, herein mobile device 30. Although illustrated wherein the index 220 is illustrated as functioning for both content 222 and input 224, it should be understood that separate indexes can be provided if desired. The use of separate indexes or an index 220 adapted to reference information based on categories allows a user to specify a search in only certain categories of information as may be desired.

Index 220 can take many forms. In one preferred embodiment, index 220 comprises pre-computed phonetic lattices of the words in content 222 and or input 224. Conversion of words in content 222 and input 224 to phonetic lattices is relatively straight forward by referencing a dictionary in order to identify component phonemes and phonetic fragments. Alternatives pronunciations of words can be included in the corresponding lattice such as the word "either", namely one node of the lattice beginning with the initial pronunciation of "ei" as "i" (as in "like") and another node beginning with the alternate initial pronunciation of "ei" as "ee" (as in "queen", both followed by the "ther". Another example is the word "primer", which has alternate pronunciations of "prim-er", with "prim" pronounced similar to "him", or "pri-mer" with "pri" pronounced similar to "high".

The voice search server 206 includes a lattice generation module 240 that receives the results from the speech recognizer 200 and/or 208 to identify phonemes and phonetic fragments according to a dictionary. Using the output from speech recognizer 204, lattice generation module 240 constructs a lattice of phonetic hypotheses, wherein each hypothesis includes an associated time boundary and accuracy score.

If desired, approaches can be used to alter the lattice for more accurate and efficient searching. For example, the lattice can be altered to allow crossover between phonetic fragments. Additionally, penalized back-off paths can be added to allow transitions between hypotheses with mismatching paths in the lattice. Thus, output scores can include inconsistent hypotheses. In order to reduce the size of the lattice, hypotheses can be merged to increase the connectivity of phonemes and thus reduce the amount of audio data stored in the lattice.

The speech recognizer 200, 208 operates based upon a dictionary of phonetic word fragments. In one embodiment, the fragments are determined based on a calculation of mutual-information of adjacent units v and w, (which may be phonemes or combinations of phonemes). Mutual information MI can be defined as follows:

$$ MI(v, w) = \log\left(\frac{P(v, w)}{P(v)\, P(w)}\right) \cdot P(v, w) $$

Any pairs (v, w) having a MI above a particular threshold can be used as candidates for fragments to be chosen for the dictionary. A pair of units can be eliminated from a candidate list if one or both of the constituent units are part of a pair with a higher MI value. Pairs that span word boundaries are also eliminated from the list. Remaining candidate pairs v w are replaced in a training corpus by single units v-w. The process for determining candidate pairs can be repeated until a desired number of fragments is obtained. Examples of fragments generated by the mutual information process described above are /-k-ih-ng/ (the syllable "-king"), /ih-n-t-ax-r/ (the syllable "inter"), /ih-z/ (the word "is") and /ae-k-ch-uw-ax-l-iy/ (the word "actually").

Voice search engine 206 accesses index 220 in order to determine if the speech input includes a match in content 222 and/or 224. The lattice generated by voice search engine 206 based on the speech input can be a phonetic sequence or a grammar of alternative sequences. During matching, lattice paths that match or closely correspond to the speech input are identified and a probability is calculated based on the recognition scores in the associated lattice. The hypotheses identified are then output by voice search engine 206 as potential matches.

As mentioned, the speech input can be a grammar corresponding to alternatives that define multiple phonetic possibilities. In one embodiment, the grammar query can be represented as a weighted finite-state network. The grammar may also be represented by a context-free grammar, a unified language model, N-gram model and/or a prefix tree, for example.

In each of these situations, nodes can represent possible transitions between phonetic word fragments and paths between nodes can represent the phonetic word fragments. Alternatively, nodes can represent the phonetic word fragments themselves. Additionally, complex expressions such as telephone numbers and dates can be searched based on an input grammar defining these expressions. Other alternatives can also be searched using a grammar as the query, for example, speech input stating "Paul's address", where alternatives are in parentheses, "Paul's (address | number)".

In a further embodiment, filtering can applied to the speech input before searching is performed to remove command information. For instance, speech input comprising "find Paul's address", "show me Paul's address", or "search Paul's address" would each yield the same query "Paul's address", where "find", "show me" and "search" would not be used in pattern matching. Such filtering can be based on semantic information included with the results received from the speech recognizer 200, 208.

It is also worth noting that a hybrid approach to searching can also be used. In a hybrid approach, phonetic fragment search can be used for queries that have a large number of phones, for example seven or greater phones. For short phones, a word-based search can be used.

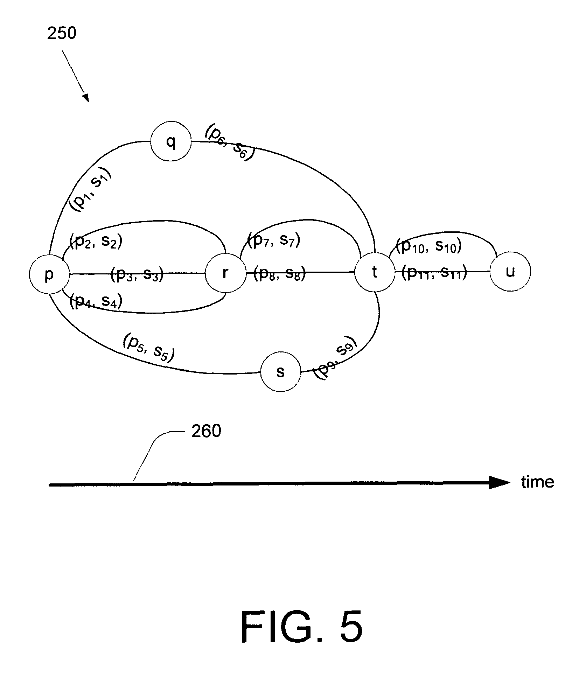

FIG. 5 illustrates an exemplary lattice 250 with nodes p-u and paths between the nodes. Each node has an associated time value or span relative to a timeline 260. Each path from one node to an adjacent node represents a phonetic word fragment (denoted by $p_n$) and includes an associated score (denoted by $s_n$) representing the likelihood of the path's hypothesis given the corresponding audio segment. A collection of phoneme hypotheses form the phonetic word fragments and paths from a phoneme hypothesis in one fragment to a phoneme hypothesis in another fragment are provided in the lattice and form a transition from one fragment to another fragment.

For example, the score of the path from node p to node q is represented as $S_1$. If a query matches node r, paths associated with scores $S_7$ and $S_8$ will be explored to node t to see if any paths match. Then, paths associated with scores $S_{10}$ and $S_{11}$ will be explored to node u. If the paths reach the end of the query, a match is determined. The associated scores along the paths are then added to calculate a hypothesis score. To speed the search process, paths need not be explored if matches share identical or near identical time boundaries.

The result of the search operation is a list of hypotheses (W, $t_s$, $t_e$, P(W $t_s$ $t_e$|O) that match the query string W in a time range from $t_s$ to $t_e$. A probability P(W $t_s$ $t_e$|O), known as the "posterior probability" is a measure of the closeness of the match. W is represented by a phoneme sequence and O denotes the acoustic observation expressed as a sequence of feature vectors ot. Summing the probabilities of all paths that contain the query string W from $t_s$ to $t_e$ yields the following equation:

$$P(W\ t_s t_e | O) = \frac{\sum_{W_-, W_+} p(O t_s t_e | W_- W W_+) P(W_- W W_+)}{\sum_{W'} p(O | W') P(W')}$$

Here, W- and $W_+$ denote any word sequences before $t_s$ and after $t_e$, respectively and W' is any word sequence. Furthermore, the value $p(Ot_s t_e \mid W\text{-}WW_+)$ is represented as:

$$p(O t_s t_e | W_- W W_+) = p(o t_{s-1} | W_-) p(o t_s t_e | W) p(o t_{e+1} T | W_+)$$

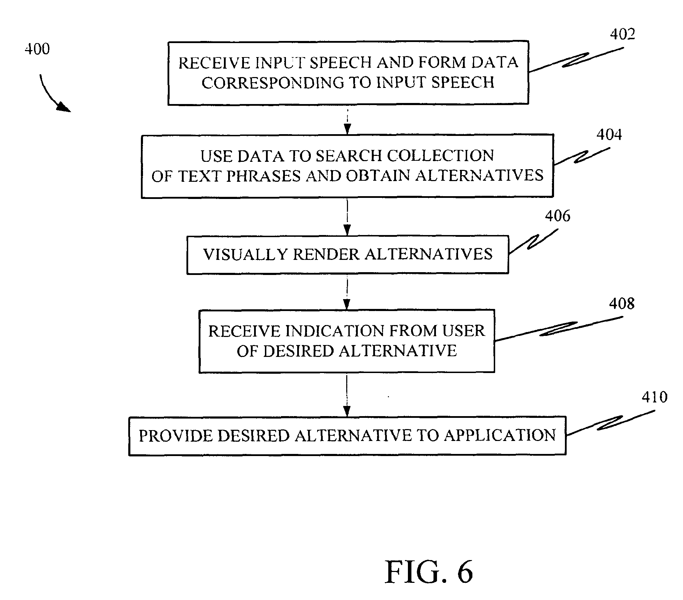

Using speech input to form queries with visual rendering of alternatives and selection therefrom provides a very easy and efficient manner in which to enter desired data for any computing device, and particularly, a mobile device for the reasons mentioned in the Background section. FIG. 6 illustrates a method 400 of providing input into a computer forming another aspect of the present invention. Method 400 includes a step 402 that entails receiving input speech from a user and providing a pattern corresponding to the input speech. At step 404, the pattern is used to search a collection of text phrases (each phrase being one or more characters) to identify one or more text phrases from the collection having a relation to the pattern.

At step 406, the one or more text phrases are visually rendered to the user. FIG. 1 illustrates an exemplary user interface 450 rendered to the user having a list of alternatives 452. (In this example, the user has provided speech input corresponding to a name of a person for scheduling a conference. The search was through the "contacts" database stored on the mobile device 30.) An indication is received from the user pertaining to one of the rendered text phrases at step 408. The indication can be provided from any form of input device, commonly a pointing device such as a stylus, mouse, joystick or the like. However, it should be understood that step 406 also includes audible indications of the desired text phrase. For instance, the rendered list of text phrases can include an identifier for each text phrase. By audibly indicating the identifier, the desired text phrase can be identified.

Having indicated which text phrase is desired at step 408, the desired text phrase can be inserted provided to an application for further processing at step 410. Typically, this includes inserting the selected phrase in a field of a form being visually rendered on the computing device. In the example of FIG. 1, the selected name will be inserted in the "Attendees" field.

The combined use of speech input and selection of visually rendered alternatives provides an efficient method for users to access information, since the user can provide a semantically rich query audibly in a single sentence or phrase without worrying about the exact order of words grammatical correctness of the phrase. The speech input is not simply converted to text and used by the application being executed on the mobile device, but rather is used to form a query to search known content on the mobile device having such or similar words. The amount of content that is searched can now be much more comprehensive since it need not all be rendered to the user. Rather, the content ascertained to be relevant to the speech input is rendered in a list of alternatives, through a visual medium. The user can easily scan the list of alternatives and choose the most appropriate alternative.

**Claims**

1. A computer-readable medium having computer-executable instructions for providing input data into a computer having a store for storing a collection of phrases existing on the computer, the instructions comprising:

  an audio capture module (204) adapted to provide data indicative of input speech;
  a voice search server (206) adapted to receive the data from the audio capture module (204), the voice search server (206) using the data to formulate a data query in order to search the collection of phrases based on information existing on the computer and to identify a plurality of phrases from the collection having a relation to the data;

  **characterised in that**
  said voice search serves is adapted to filter the data to remove at least one word not to be searched in the collection, said at least one word being indicative of a command, and to access the storre and by
  a module for visually rendering the plurality of phrases on the computer and receiving an indication from the user of a selected one of the plurality of phrases.

2. The computer-readable medium of claim 1 wherein the voice search server (206) is adapted to add alternatives for at least one word in the data.

3. The computer-readable medium of any of claims 1 or 2 wherein the voice search server (206) includes a lattice generator (240) adapted to form a phonetic lattice for the input speech and is adapted to use the data to search the collection by comparing the phonetic lattice for the input speech with phonetic lattices for the collection.

4. The computer readable medium of claim 3 wherein the phonetic lattices for the collection are stored in an index on the computer.

5. The computer readable medium of any of claims 1 or 2 wherein the data query is used to search an index related to the collection of phrases.

6. A method for providing input into a computer, the method comprising:

  receiving (402) input speech from a user and providing data corresponding to the input speech;
  said at least one word is indicative of a command;
  forming a data query using the data;
  using (404) the data query to search a collection of phrases from a store on the computer based on information existing on the computer and identifying a plurality of phrases from the collection having a relation to the data;

  **characterized by**
  filtering the data to remove at least one word not to be searched in the collection; wherein said at least one word is indicative of a command; and
  visually rendering (406) the plurality of phrases to the user;
  receiving (408) an indication of selection from the user of one of the plurality of phrases; and
  providing (410) the selected phrase to an application.

7. The method of claim 6 wherein receiving (408) an indication comprises operating a pointing device.

8. The method of claim 6 wherein receiving an indication (408) comprises receiving an audible indication.

9. The method of any of claims 6 to 8 wherein providing (410) the selected phrase comprises inserting the selected phrase in a field of a form rendered on the computer.

10. The method of any of claims 6 to 9 and further comprising adding alternatives for at least one word in the data.

11. The method of any of claims 6 to 9 wherein providing data includes forming a phonetic lattice for the input speech and using the data to search the collection includes comparing the phonetic lattice for the input speech with phonetic lattices for the collection.

12. A mobile computing device comprising:

a store for storing a collection of phrases;
an audio capture module (204) adapted to provide data indicative of input speech;
a voice search server (206) adapted to receive the data from the audio capture module (204); the voice search server (206) using the data to formulate a data query in order to search the collection of phrases based on information existing on the computer and to identify a plurality of phrases from the collection having a relation to the data;

**characterized in that**
said voice search serves is adapted to access the store, to filter the data to remove at least one word not to be searched in the collection, said at least one word being indicative of a command, and by
a display/input module for visually rendering the plurality of phrases on the computer and receiving an indication from the user of a selected one of the pluralist of phrases.

13. The mobile computing device of claim 12 wherein the voice search server (206) is adapted to add alteratives for at least one word in the data,

14. The mobile computing device of any of claims 12 to 13 wherein the voice search server (206) includes a lattice generator (240) adapted to form a phonetic lattice for the input speech and is adapted to use the data to search the collection by comparing the phonetic lattice for the input speech with phonetic lattices for the collection.

15. The mobile computing device of claim 12 wherein the phonetic lattices for the collection are stored in an index on the computer.

16. The mobile computing device of claim 12 wherein the data query is used to search an index related to the collection of phrases.


**Patentansprüche**

1. Computerlesbares Medium, das durch Computer ausführbare Befehle zum Bereitstellen von Eingangsdaten in einem Computer aufweist, der über einen Speicher zum Speichern einer Sammlung von Phrasen verfügt, die auf dem Computer vorhanden sind, wobei die Befehle umfassen:

ein Audioerfassungs-Modul (204), das so eingerichtet ist, dass es Daten bereitstellt, die Spracheingabe anzeigen;
einen Sprachsuch-server (voice search server) (206), der so eingerichtet ist, dass er die Daten von dem Audioerfassungs-Modul (204) empfängt, wobei der Sprachsuch-Server (206) die Daten verwendet, um eine Datenabfrage zum Durchsuchen der Sammlung von Phrasen auf Basis von Informationen zu formulieren, die auf dem Computer vorhanden sind, und eine Vielzahl von Phrasen aus der Sammlung zu identifizieren, die eine Beziehung zu den Daten haben;

**gekennzeichnet**
**dadurch, dass** der Sprachsuch-Server so eingerichtet ist, dass er die Daten filtert, um wenigstens ein nicht in der Sammlung zu suchendes Wort zu entfernen, wobei das wenigstens eine Wort einen Befehl anzeigt, und er auf den Speicher zugreift;

und durch ein Modul, mit dem die Vielzahl von Phrasen auf dem Computer visuell wiedergegeben wird und eine Anzeige einer ausgewählten der Vielzahl von Phrasen von dem Benutzer empfangen wird.

2. Computerlesbares Medium nach Anspruch 1, wobei der Sprachsuch-Server (206) so eingerichtet ist, dass er Alternativen für wenigstens ein Wort in den Daten hinzufügt.

3. Computerlesbares Medium nach einem der Ansprüche 1 oder 2, wobei der Sprachsuch-Server (206) eine Gitter-Erzeugungseinrichtung (240) enthält, die so eingerichtet ist, dass sie ein phonetisches Gitter für die Spracheingabe ausbildet, und so eingerichtet ist, dass sie die Daten verwendet, um die Sammlung zu durchsuchen, indem sie das phonetische Gitter für die Spracheingabe mit phonetischen Gittern für die Sammlung vergleicht.

4. Computerlesbares Medium nach Anspruch 3, wobei die phonetischen Gitter für die Sammlung in einem Index auf dem Computer gespeichert sind.

5. Computerlesbares Medium nach einem der Ansprüche 1 oder 2, wobei die Datenabfrage verwendet wird, um einen Index zu durchsuchen, der sich auf die Sammlung von Phrasen bezieht.

6. Verfahren, mit dem Eingabe in einen Computer ermöglicht wird, wobei das Verfahren umfasst:

    Empfangen (402) von Spracheingabe von einem Benutzer und Bereitstellen von Daten, die der Spracheingabe entsprechen;
    Ausbilden einer Datenabfrage unter Verwendung der Daten;
    Verwenden (404) der Datenabfrage, um eine Sammlung von Phrasen aus einem Speicher auf dem Computer auf Basis von Informationen zu durchsuchen, die auf dem Computer vorhanden sind, und Identifizieren einer Vielzahl von Phrasen aus der Sammlung, die eine Beziehung zu den Daten haben;

    **gekennzeichnet durch**
    Filtern der Daten, um wenigstens ein nicht in der Sammlung zu suchendes Wort zu entfernen; wobei das wenigstens eine Wort einen Befehl anzeigt; und
    visuelles Wiedergeben (406) der Vielzahl von Phrasen für den Benutzer;
    Empfangen (408) einer Anzeige einer Auswahl einer der Vielzahl von Phrasen von dem Benutzer; und
    Bereitstellen (410) der ausgewählten Phrase für eine Anwendung.

7. Verfahren nach Anspruch 6, wobei Empfangen (408) einer Anzeige Betätigen einer Zeigeeinrichtung umfasst.

8. Verfahren nach Anspruch 6, wobei Empfangen einer Anzeige (408) Empfangen einer akustischen Anzeige umfasst.

9. Verfahren nach einem der Ansprüche 6 bis 8, wobei Bereitstellen (410) der ausgewählten Phrase Einfügen der ausgewählten Phrase in ein Feld eines Formulars umfasst, das auf dem Computer dargestellt wird.

10. Verfahren nach einem der Ansprüche 6 bis 9, das des Weiteren Hinzufügen von Alternativen für wenigstens ein Wort in den Daten umfasst.

11. Verfahren nach einem der Ansprüche 6 bis 9, wobei Bereitstellen von Daten Ausbilden eines phonetischen Gitters für die Spracheingabe einschließt, und Verwenden der Daten zum Durchsuchen der Sammlung Vergleichen des phonetischen Gitters für die Spracheingabe mit phonetischen Gittern für die Sammlung einschließt.

12. Mobile Computervorrichtung, die umfasst:

    einen Speicher zum Speichern einer Sammlung von Phrasen;
    ein Audioerfassungs-Modul (204), das so eingerichtet ist, dass es Daten bereitstellt, die Spracheingabe anzeigen;
    einen Sprachsuch-Server (voice search server) (206), der so eingerichtet ist, dass er die Daten von dem Audioerfassungs-Modul (204) empfängt, wobei der Sprachsuch-Server (206) die Daten verwendet, um eine Datenabfrage zum Durchsuchen der Sammlung von Phrasen auf Basis von Informationen zu formulieren, die auf dem Computer vorhanden sind, und eine Vielzahl von Phrasen aus der Sammlung zu identifizieren, die eine

EP 1 617 409 B1

Beziehung zu den Daten haben;

**gekennzeichnet**
**dadurch, dass** der Sprachsuch-Server so eingerichtet ist, dass er auf den Speicher zugreift und die Daten filtert, um wenigstens ein nicht in der Sammlung zu suchendes Wort zu entfernen, wobei das wenigstens eine Wort einen Befehl anzeigt,
und durch
ein Anzeige-Eingabe-Modul zum visuellen Wiedergeben der Vielzahl von Phrasen auf dem Computer und zum Empfangen einer Anzeige einer ausgewählten der Vielzahl von Phrasen von dem Benutzer.

13. Mobile Computervorrichtung nach Anspruch 12, wobei der Sprachsuch-Server (206) so eingerichtet ist, dass er Alternativen für wenigstens ein Wort in den Daten hinzufügt.

14. Mobile Computervorrichtung nach einem der Ansprüche 12 bis 13, wobei der Sprachsuch-Server (206) eine Gitter-Erzeugungseinrichtung (240) enthält, die so eingerichtet ist, dass sie ein phonetisches Gitter für die Spracheingabe ausbildet, und so eingerichtet ist, dass sie die Daten verwendet, um die Sammlung zu durchsuchen, indem sie das phonetische Gitter für die Spracheingabe mit phonetischen Gittern für die Sammlung vergleicht.

15. Mobile Computervorrichtung nach Anspruch 12, wobei die phonetischen Gitter für die Sammlung in einem Index auf dem Computer gespeichert sind.

16. Mobile Computervorrichtung nach Anspruch 12, wobei die Datenabfrage verwendet wird, um einen Index zu durchsuchen, der sich auf die Sammlung von Phrasen bezieht.

**Revendications**

1. Support lisible par ordinateur comprenant des instructions exécutables par ordinateur pour fournir des données d'entrée dans un ordinateur comprenant une mémoire pour mémoriser un ensemble de phrases présentes sur l'ordinateur, les instructions comprenant :

   un module de capture audio (204) conçu pour fournir des données représentatives de parole d'entrée ;
   un serveur de recherche vocale (206) conçu pour recevoir les données du module de capture audio (204), le serveur de recherche vocale (206) utilisant les données pour formuler une demande de données afin d'effectuer une recherche dans l'ensemble de phrases en fonction des informations présentes sur l'ordinateur et d'identifier plusieurs phrases contenues dans l'ensemble ayant un rapport avec les données ;

   **caractérisé en ce que**
   ledit serveur de recherche vocale est conçu pour filtrer les données en vue de retirer au moins un mot ne devant pas être recherché dans l'ensemble, le mot reflétant une instruction, et pour accéder à la mémoire ;
   et par un module pour rendre visuellement lesdites phrases sur l'ordinateur et recevoir, de l'utilisateur, une indication d'une phrase sélectionnée parmi lesdites phrases.

2. Support lisible par ordinateur conformément à la revendication 1, dans lequel le serveur de recherche vocale (206) est conçu pour ajouter des alternatives pour au moins un mot dans les données.

3. Support lisible par ordinateur conformément à l'une quelconque des revendications 1 ou 2, dans lequel le serveur de recherche vocale (206) comprend un générateur de treillis (240) conçu pour former un treillis phonétique pour la parole d'entrée et est conçu pour utiliser les données afin d'effectuer une recherche dans l'ensemble par comparaison du treillis phonétique pour la parole d'entrée aux treillis phonétiques pour l'ensemble.

4. Support lisible par ordinateur conformément à la revendication 3, dans lequel les treillis phonétiques pour l'ensemble sont mémorisés dans un répertoire présent sur l'ordinateur.

5. Support lisible par ordinateur conformément à l'une quelconque des revendications 1 ou 2, dans lequel la demande de données est utilisée pour effectuer une recherche dans le répertoire ayant un rapport avec l'ensemble de phrases.

6. Procédé pour fournir une entrée dans un ordinateur comprenant :

la réception (402) de parole d'entrée de l'utilisateur et la fourniture de données correspondant à la parole d'entrée ;
la génération d'une demande de données à l'aide des données ;
l'utilisation (404) de la demande de données pour effectuer une recherche dans un ensemble de phrases d'une mémoire sur l'ordinateur en fonction d'informations présentes sur l'ordinateur et l'identification de plusieurs phrases de l'ensemble ayant un rapport avec les données ;

**caractérisé par**
la filtration des données en vue de retirer au moins un mot ne devant pas être recherché dans l'ensemble ; ledit mot reflétant une instruction ;
et le rendu visuel (406) desdites phrases à l'intention de l'utilisateur ;
la réception (408) d'une indication de sélection de l'utilisateur de l'une desdites phrases ; et
la fourniture (410) de la phrase sélectionnée à une application.

7.  Procédé conformément à la revendication (6), dans lequel la réception (408) d'une indication comprend l'actionnement d'un dispositif de pointage.

8.  Procédé conformément à la revendication 6, dans lequel la réception d'une indication (408) comprend la réception d'une indication audible.

9.  Procédé conformément à l'une quelconque des revendications 6 à 8, dans lequel la fourniture (410) de la phrase sélectionnée comprend l'introduction de la phrase sélectionnée dans un champ d'une forme rendue sur l'ordinateur.

10. Procédé conformément à l'une quelconque des revendications 6 à 9 comprenant en outre l'ajout d'alternatives pour au moins un mot dans les données.

11. Procédé conformément à l'une quelconque des revendications 6 à 9, dans lequel la fourniture de données comprend la formation d'un treillis phonétique pour la parole d'entrée et l'utilisation des données pour effectuer une recherche dans l'ensemble comprend la comparaison du treillis phonétique pour la parole d'entrée à des treillis phonétiques pour l'ensemble.

12. Dispositif informatique mobile comprenant :

une mémoire pour mémoriser un ensemble de phrases ;
un module de capture audio (204) conçu pour fournir les données représentatives de la parole d'entrée ;
un serveur de recherche vocale (206) conçu pour recevoir les données du module de capture audio (204), le serveur de recherche vocale (206) utilisant les données pour formuler une demande de données afin d'effectuer une recherche dans l'ensemble de phrases en fonction d'informations présentes sur l'ordinateur et pour identifier plusieurs phrases de l'ensemble ayant un rapport avec les données ;

**caractérisé en ce que**
ledit serveur de recherche vocale est conçu pour accéder à la mémoire, pour filtrer les données en vue de retirer au moins un mot ne devant pas être recherché dans l'ensemble, ledit mot reflétant une instruction ;
et par un module d'affichage/entrée pour rendre visuellement lesdites phrases sur l'ordinateur et recevoir, de l'utilisateur, une indication d'une phrase sélectionnée parmi lesdites phrases.

13. Dispositif informatique mobile conformément à la revendication 12, dans lequel le serveur de recherche vocale (206) est conçu pour ajouter des alternatives pour au moins un mot dans les données.

14. Dispositif informatique mobile conformément à l'une quelconque des revendications 12 ou 13, dans lequel le serveur de recherche vocale (206) comprend un générateur de treillis (240) conçu pour former un treillis phonétique pour la parole d'entrée et est conçu pour utiliser les données afin d'effectuer une recherche dans l'ensemble par comparaison du treillis phonétique pour la parole d'entrée à des treillis phonétiques pour l'ensemble.

15. Dispositif informatique mobile conformément à la revendication 12, dans lequel les treillis phonétiques pour l'ensemble sont mémorisés dans un répertoire sur l'ordinateur.

16. Dispositif informatique mobile conformément à la revendication 12, dans lequel la demande de données est utilisée pour effectuer une recherche dans un répertoire en rapport avec l'ensemble de phrases.

30

43

32

35

33

35

450

452

35

Appointment | Cancel √

Subject

Location

Attendees

St

St

E

R

C

Paul Toman
Norm Coleman
Peter Kohl
Dennis Anderson
Julie Tahlsen
Eric Moe
Justin Roller
Anne Koehler
Paul Joseph
Phillip Mahler

Voi

Do:

34

# FIG. 1

COMMUNICATION INTERFACE 60

KEYPAD 36

WIRELESS TRANSCEIVER 52

DISPLAY SCREEN 34

CPU 50

ROM 58

RAM MEMORY 54

A/D 37

D/A 59

MICROPHONE 29

SPEAKER 43

30

FIG.2

FIG. 3

SYSTEM MEMORY 150
(ROM) 151
BIOS 153
(RAM) 152
OPERATING SYSTEM 154
APPLICATION PROGRAMS 155
OTHER PROGRAM MODULES 156
PROGRAM DATA 157

PROCESSING UNIT 140

NON-REMOVABLE NON-VOL. MEMORY INTERFACE 160

REMOVABLE NON-VOL. MEMORY INTERFACE 170

VIDEO INTERFACE 141

OUTPUT PERIPHERAL INTERFACE 185

USER INPUT INTERFACE 180

NETWORK INTERFACE 190

MONITOR 184
PRINTER 186
SPEAKERS 187

188

LOCAL AREA NETWORK 191

WIDE AREA NETWORK

MODEM 192
193
KEYBOARD 182
POINTING DEVICE 181
MICROPHONE 183

REMOTE COMPUTER 194
REMOTE APPLICATION PROGRAMS 195

161
171
172
175
176

OPERATING SYSTEM 164
APPLICATION PROGRAMS 165
OTHER PROGRAM MODULES 166
PROGRAM DATA 167

120

MICROPHONE — 29

DISPLAY — 34

AUDIO CAPTURE MODULE — 204

VOICE SEARCH SERVER — 206

LATTICE GEN. — 240

LOCAL SPEECH RECOGNIZER — 208

REMOTE SPEECH RECOGNIZER — 200

INDEX — 220

CONTENT ON MOBILE DEVICE — 222

MANUALLY ENTERED TEXT — 224

FIG. 4

FIG. 5

400

402

RECEIVE INPUT SPEECH AND FORM DATA
CORRESPONDING TO INPUT SPEECH

404

USE DATA TO SEARCH COLLECTION
OF TEXT PHRASES AND OBTAIN ALTERNATIVES

406

VISUALLY RENDER ALTERNATIVES

408

RECEIVE INDICATION FROM USER
OF DESIRED ALTERNATIVE

410

PROVIDE DESIRED ALTERNATIVE TO APPLICATION

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20041243415 A1
- US 5799276 A
- US 2002048350 A1